# EUROPÄISCHE PATENTANMELDUNG

(11) **EP 0 815 952 A2**
(43) Veröffentlichungstag der Anmeldung: **07.01.1998**
(21) Anmeldenummer: 97110321.3
(22) Anmeldetag: 24.06.1997
(51) Int. Cl.: B05D 5/06, C09D 183/14, C09D 183/02

(54) **Verfahren zur Herstellung einer Schutzschicht mit reflektierenden und/oder absorbierenden Eigenschaften**

(30) Priorität: 24.06.1996 DE 19625229
(71) Anmelder: FRAUNHOFER-GESELLSCHAFT ZUR FÖRDERUNG DER ANGEWANDTEN FORSCHUNG E.V., 80636 München (DE)
(72) Erfinder: Amberg-Schwab, Sabine, Dr., 97250 Erlabrunn (DE); Rose, Klaus, Dr., 97318 Kitzingen (DE); Hutter, Frank, Dr., 97084 Würzburg (DE)
(74) Vertreter: Pfenning, Meinig & Partner

(57) **Zusammenfassung**

Die Erfindung betrifft ein Verfahren zur Herstellung einer Schutzschicht mit reflektierenden und/oder absorbierenden Eigenschaften auf Substraten, wobei in die Schutzschicht 2 bis 30 Gew.% eines Zusatzstoffes mit reflektierenden und/oder absorbierenden Eigenschaften eingearbeitet worden sind, und/oder zwischen der Substratoberfläche und der Schutzschicht mit oder ohne Zusatzstoff mindestens eine zusätzliche Schicht mit reflektierenden und/oder absorbierenden Eigenschaften aufgebracht wird.

## Beschreibung

Die Erfindung betrifft ein Verfahren zur Herstellung einer Schutzschicht mit reflektierenden und/oder absorbierenden Eigenschaften auf Substraten, wobei eine Schutzschicht aufgebracht wird, die aus einem organisch modifizierten Kieselsäure(hetero)polykondensat besteht und in die Zusatzstoffe mit reflektierenden und/oder absorbierenden Eigenschaften eingebracht sind, und/oder daß zwischen Substratoberfläche und der Schutzschicht eine zusätzliche Schicht mit reflektierenden Eigenschaften vorhanden ist.

Aus dem Stand der Technik ist es bisher bekannt, in der Kühl- und Gefriertechnik für Seitenscheiben und Abdeckhauben Metalle oder Glas zu verwenden. Glas wird dann eingesetzt, wenn das Kühl- oder Gefriergut von außen sichtbar sein soll. Um Kälteverluste bei Kühl- und Gefriergut möglichst zu vermeiden, wird das eingesetzte Sicherheitsglas mit einer Metallbedampfung (Silberbedampfung) versehen, die die Funktion übernimmt, IR-Wärmestrahlung zu reflektieren. Diese Seitenscheiben und Abdeckhauben haben jedoch den Nachteil, daß sie bei Verwendung von Metall und Glas zu schwer sind, und wenn Seitenscheiben aus Glas eingesetzt werden, die aufgebrachte Metallbedampfung nur eine unbefriedigende Abriebbeständigkeit aufweist. Auch hat es sich gezeigt, daß die reflektierenden bzw. die absorbierenden Eigenschaften gegenüber IR-Wärmestrahlung nicht befriedigend sind. Nachteilig bei derartigen Abdeckhauben und Seitenscheiben ist weiterhin, daß bei Metall keine Transparenz mehr vorhanden ist.

Ausgehend hiervon, ist es die Aufgabe der vorliegenden Erfindung, ein neues Verfahren vorzuschlagen, mit dem eine Schutzschicht erzeugt werden kann, die selbst transparent ist und die auf Kunststoffen, insbesondere auf PMMA oder Polycarbonat, problemlos aufgebracht werden kann. Diese Schutzschicht soll bei gleichbleibender Transparenz reflektierende und/oder absorbierende Eigenschaften aufweisen.

Die Aufgabe wird durch die kennzeichnenden Merkmale des Patentanspruches 1 gelöst. Die Unteransprüche zeigen vorteilhafte Weiterbildungen auf.

Erfindungsgemäß wird somit vorgeschlagen, auf Substraten, insbesondere auf PMMA oder Polycarbonat, eine Schutzschicht aufzubringen, die eine Dicke von 5 bis 150 µm aufweist und die aus sogenannten ORMOCERen besteht, wobei diese ORMOCERe 2 bis 30 Gew.% eines Zusatzstoffes mit reflektierenden und/oder absorbierenden Eigenschaften enthalten. Neben der vorstehend beschriebenen Vorgehensweise kann auch auf der Substratoberfläche selbst mindestens eine zusätzliche Schicht mit reflektierenden und/oder absorbierenden Eigenschaften aufgebracht werden. Dabei ist es auch möglich, daß die ORMOCERe-Schutzschicht selbst reflektierende und/oder absorbierende Eigenschaften aufweist. Bevorzugt wird jedoch eine transparente ORMOCERe-Schicht - ohne Zusatzstoffe - auf der zusätzlichen Schicht aufgebracht. Die beiden beschriebenen Varianten ermöglichen es, Schutzschichten herzustellen mit reflektierenden und/oder absorbierenden Eigenschaften, die gleichzeitig alle positiven Eigenschaften der ORMOCER-Beschichtung verbinden.

Bei ORMOCERen handelt es sich um anorganisch-organische Verbundpolymere. Ihr prinzipieller Aufbau leitet sich von der Netzwerkstruktur des Kieselglases mit Si-O-Si-Bindungen ab. Werden in diesem anorganischen Netzwerk Si-O-Si-Bindungen partiell durch Si-C-Bindungen ersetzt, so erhält man die Werkstoffklasse der ORMOCERe. Die auf diese Weise eingeführten organischen Substituenten wirken z.B. als Netzwerkwandler, d.h. sie lockern die anorganische Struktur. Es ist ebenfalls möglich, reaktive organische Substituenten in dem anorganischen Netzwerk zu verankern, die ein zusätzliches organisches Netzwerk zwischen den einzelnen Si-Zentren aufbauen können, also als Netzwerkbildner fungieren. Eine weitere Möglichkeit der organischen Modifikation bietet der Aufbau eines organischen Netzwerkes über den Einsatz von nicht an Silicium gebundenen organischen Reaktivmonomeren bzw. Oligomeren. Das anorganische Netzwerk läßt sich durch den Einbau von Heteroatomen wie Aluminium, Zirkon, Titan etc. ebenfalls gezielt modifizieren.

Der Aufbau des anorganischen Netzwerkes erfolgt im Sol-Gel-Prozeß durch die gesteuerte Hydrolyse und Kondensation von substituierten Kieselsäureestern bzw. anderen Metallestern in Lösung. Die möglichen Reaktionen zum Aufbau des organischen Netzwerkes folgen den bekannten Prinzipien der Polymerchemie und sind thermisch bzw. photochemisch induzierbar.

Aufgrund der hybriden Struktur (anorganische/organische Strukturelemente) der ORMOCERe in molekularem Maßstab sind die resultierenden Materialeigenschaften zwischen denen der klassischen anorganischen Werkstoffe Glas und Keramik sowie denen der organischen Polymere einzuordnen. Es besteht die Möglichkeit, die Eigenschaften gezielt durch Variation der Eduktzusammensetzung bzw. der Prozeßparameter zu steuern, um für besondere Anwendungsfälle ein spezielles Eigenschaftsprofil zu erzeugen.

Derartige ORMOCER sind z.B. in der DE 38 28 098 und der DE 43 03 570 beschrieben. Auf den Offenbarungsgehalt wird hierbei ausdrücklich Bezug genommen. Bevorzugt werden die ORMOCERe erhalten durch hydrolytische Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den obengenannten Verbindungen abgeleiteten Vorkondensaten, gegebenenfalls in Anwesenheit eines Katalysators und/oder eines Lösungsmittels durch Einwirken von Wasser oder Feuchtigkeit, wobei 10 bis 100 Mol-% auf der Basis monomerer Verbindungen der hydrolytisch kondensierbaren Verbindungen Silane der allgemeinen Formel I sind, 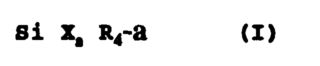 in der die Reste und Indices gleich oder verschieden sind und folgende Bedeutung haben:
- R =: gegebenenfalls substituiertes Alkyl, Alkenyl, Aryl, Alkylaryl oder Arylalkyl mit 1 bis 50 Kohlenstoff-Atomen, wobei diese Reste durch Sauerstoff- oder Schwefel-Atome durch Urethan-, Ester-, Carbonyl-, Amid- oder Amino-Gruppen unterbrochen sein können;
- X =: Wasserstoff, Halogen, Hydroxy, Alkoxy, Acyloxy, Alkylcarbonyl, Alkoxycarbonyl oder NR'₂ mit R' = Wasserstoff, Alkyl oder Aryl;
- a =: 1, 2 oder 3.

Die erfindungsgemäße Schutzschicht besteht aus der vorstehend beschriebenen ORMOCER-Schicht, in der 2 bis 30 Gew.% eines Zusatzstoffes mit reflektierenden und/oder absorbierenden Eigenschaften enthalten sind. Grundsätzlich können hierbei als Zusatzstoffe sowohl heterogen einzuarbeitende Füllstoffe als auch homogen einzuarbeitende gelöste Zusätze zur Anwendung kommen. Bevorzugt ist der Zusatzstoff ein Füllstoff, wobei der Füllstoff ausgewählt ist aus Metallpulver wie Zinkstaub, Metallpartikeln wie Silber oder aus nichtmetallischen oxidischen oder keramischen Füllstoffen. Es ist hierbei auch möglich, daß die Zusatzstoffe einzeln oder in Mischung der ORMOCER-Schicht zugesetzt werden. Je nach Anteil kann hierdurch die reflektierende und/oder absorbierende Wirkung erhöht werden. Eine größere Menge an Metallpulver bewirkt eine stärkere reflektierende Wirkung, dagegen haben die nichtmetallischen Füllstoffe einen höheren Anteil an absorbierender Wirkung zur Folge.

Bei den homogen einzuarbeitenden gelösten Zusätzen ist der gelöste Zusatzstoff bevorzugt ausgewählt aus in Lösungsmitteln gelösten Metallkomplexen, wie z.B. Metallkomplexen des zweiwertigen Eisens oder des vierwertigen Vanadiums. Auch können Metallkomplexe der II. Übergangsreihe, insbesondere Komplexe von Phthalocyaninen und Dithiolverbindungen verwendet werden. Als gelöster Zusatzstoff sind auch aromatische Nitrosoverbindungen geeignet.

Besonders bevorzugt ist es hierbei, wenn sich die Menge des Zusatzstoffes im Bereich von 5 bis 20 % bewegt.

Neben der vorstehend beschriebenen Möglichkeit, den Zusatzstoff mit den reflektierenden und/oder absorbierenden Eigenschaften in die ORMOCER-Schicht selbst einzuarbeiten, ist erfindungsgemäß weiter vorgesehen, auf die Substratoberfläche eine separate Schicht mit reflektierenden und/oder absorbierenden Eigenschaften aufzubringen und eine transparente ORMOCER-Schicht als Schutzschicht über dieser Schicht vorzusehen. Ausreichend für diese Schicht ist eine Dicke von maximal 3 µm, sogar einige Nanometer (nm) genügen. Es ist auch möglich, daS die ORMOCERe-Schicht selbst zusätzlich noch die vorstehend beschriebenen Zusatzstoffe aufweist.

Bei dieser Verfahrensvariante ist besonders bevorzugt, die zusätzliche abzuscheidende Schicht, die vorzugsweise eine Metallsulfidschicht ist, aus einer frisch hergestellten Lösung aufzubringen. Es wird dabei so vorgegangen, daß eine geeignete Metallsalzlösung hergestellt wird und diese auf der Substratoberfläche aufgebracht wird, und daß dann die Abscheidung der Metallsulfidschicht direkt auf der Substratoberfläche stattfindet. Dadurch werden Schichten mit reflektierenden und/oder absorbierenden Eigenschaften erzeugt, die besonders überraschende Eigenschaften aufweisen. Im Anschluß daran wird dann die ORMOCER-Schicht, wie an und für sich aus dem Stand der Technik bekannt ist, aufgetragen. Bei den Metallsulfiden sind insbesondere die Sulfide von Kupfer, Blei und Zink bevorzugt.

Überraschenderweise hat sich herausgestellt, daß die vorstehend beschriebene Schutzschicht besonders auf PMMA und Polycarbonat ausgezeichnete Haftungseigenschaften aufweist, wobei die Schutzschicht transparent ist und gleichzeitig eine gute Absorption bzw. Reflektion der Wärmestrahlung ermöglicht. Die erfindungsgemäße Schutzschicht ist dabei so aufgebaut, daß auch bei einer Beschichtungsdicke von ca. 10 µm die Verbunde aus dem Substrat, z.B. dem PMMA, und die Beschichtung eine zu metallisierendem Glas vergleichbare geringe Durchlässigkeit für IR-Wärmestrahlung aufweist.

Der Erfindung wird nachfolgend durch ein Ausführungsbeispiel näher erläutert.

### Ausführungsbeispiel

Abscheiden von dünnen Metallsulfidschichten (Cu, Pb, Zn) auf Polymerträger oder auf Glas mit reflektierenden Eigenschaften und anschließende Applikation einer ORMOCER-Schutzbeschichtung (Abscheiden einer CuS-Schicht auf PMMA aus einer frisch hergestellten Lösung):

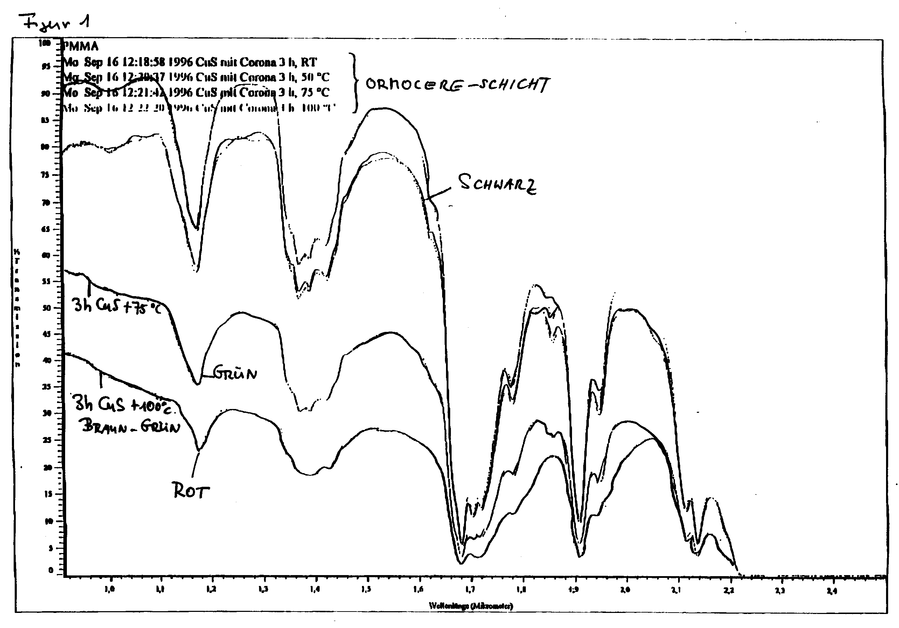

Zu 5 ml einer 1 m Lösung von CuCl₂*3H₂O werden 4 ml 50 % Triethanolamin, 8 ml 30 % NH₄OH, 10 ml 1 m NaOH-Lösung und 6 ml 1 molare Thioharnstofflösung zugegeben. Anschließend wird mit Wasser auf 100 ml aufgefüllt. Gereinigte PMMA-Platten werden in dieses Bad gestellt, die CuS-Abscheidung findet bei Raumtemperatur oder bei höheren Temperaturen statt. Die Abscheidungsgeschwindigkeit hängt von der Temperatur ab: je höher die Temperatur, desto höher ist die Abscheidungsrate. Auch die Zeitdauer des Verbleibens der Platten im Bad hat einen entscheidenden Einfluß auf die Menge des abgeschiedenen CuS-Films (Figur 1).

Anschließend werden die Platten mit destilliertem Wasser abgespült und getrocknet. Die Metallsulfidschichten haften sehr gut, d.h. die Polymerträger können sogar ohne Abplatzen der Filme verformt werden. Allerdings sind die Metallsulfidfilme sehr abrieb- und kratzempfindlich. Durch die anschließende Applikation eines ORMOCER-Lackes wird die Metallsulfidschicht verfestigt, und man bekommt eine abriebbeständige Oberfläche. Die IR-reflektierende Wirkung bleibt dabei erhalten.

Das IR-Spektrum (Fig. 1) wurde an PMMA-Platten aufgenommen, die mit einer CuS und einer kratzfesten ORMOCER-Schicht versehen waren. Das Spektrum zeigt eine Verminderung der IR-Wärmestrahlung in Abhängigkeit von der Trockentemperatur der CuS-Schicht:
Schwarze Kurve:
   3h CuS-Lösung + 3h trocknen b. 20 °C + ORMOCER-Schicht,
Grüne Kurve:
   3h CUS-Lösung + 3h trocknen b. 75 °C + ORMOCER-Schicht,
Rote Kurve:
   3h CuS-Lösung + 3h trocknen b.100 °C + ORMOCER-Schicht

## Patentansprüche

1. Verfahren zur Herstellung einer Schutzschicht mit reflektierenden und/oder absorbierenden Eigenschaften auf Substraten,
dadurch **gekennzeichnet,**
daß eine Schutzschicht mit einer Dicke von 5 bis 150 µm aus einem organisch modifizierten Kieselsäurepolykondensat und/oder organisch modifizierten Kieselsäure(hetero)polykondensat auf dem Substrat aufgebracht wird, wobei in die Schutzschicht 2 bis 30 Gew.% eines Zusatzstoffes mit reflektierenden und/oder absorbierenden Eigenschaften eingearbeitet worden sind, und/oder daß zwischen der Substratoberfläche und der Schutzschicht mit oder ohne Zusatzstoff mindestens eine zusätzliche Schicht mit reflektierenden und/oder absorbierenden Eigenschaften aufgebracht wird.

2. Verfahren nach Anspruch 1,
dadurch gekennzeichnet, daß als Zusatzstoff ein dem Kieselsäure(hetero)polykondensat vor der Applikation zugesetzter anorganischer Füllstoff eingesetzt wird.

3. Verfahren nach Anspruch 2,
dadurch gekennzeichnet, daß der Füllstoff ausgewählt wird aus Metallpulver wie Zinkstaub, Metallpartikel wie Silber, oxidischen oder keramischen oder nichtmetallischen Füllstoffen.

4. Schutzschicht nach Anspruch 1,
dadurch gekennzeichnet, daß als Zusatzstoff ein dem Kieselsäure(hetero)polykondensat vor der Applikation zugesetzter gelöster Zusatzstoff eingesetzt wird.

5. Verfahren nach Anspruch 4,
dadurch gekennzeichnet, daß der gelöste Zusatzstoff ausgewählt wird aus in Lösungsmitteln gelösten Metallkomplexen wie z.B. Metallkomplexen des zweiwertigen Eisens oder des vierwertigen Vanadiums oder der II. Übergangsreihe, insbesondere Phthalocyaninkomplexe oder Dithiolverbindungen oder gelösten aromatischen Nitrosoverbindungen.

6. Verfahren nach mindestens einem der Ansprüche 1 bis 5,
dadurch gekennzeichnet, daß 5 bis 20 % des Zusatzstoffes enthalten sind.

7. Verfahren nach mindestens einem der Ansprüche 1 bis 6,
dadurch gekennzeichnet, daß die zusätzlich auf der Substratoberfläche abgeschiedene Schicht eine Dicke von < 3 µm aufweist.

8. Verfahren nach Anspruch 7,
dadurch gekennzeichnet, daß auf der Substratoberfläche als zusätzliche Schicht eine Metallsulfidschicht, ausgewählt aus den Metallen Kupfer, Blei oder Zink, aufgebracht wird.

9. Verfahren nach Anspruch 8,
dadurch gekennzeichnet, daß die Metallsulfidschicht aus einer vor der Abscheidung neu hergestellten Metallsulfid enthaltenden Lösung hergestellt wird.

10. Verfahren nach mindestens einem der Ansprüche 1 bis 9,
dadurch gekennzeichnet, daß das Substrat Polymethylmetacrylat (PMMA) oder Polycarbonat ist.

11. Verfahren nach mindestens einem der Ansprüche 1 bis 10,
dadurch gekennzeichnet, daß das organisch modifizierte Kieselsäure(hetero)polykondensat erhalten wird durch hydrolytische Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den obengenannten Verbindungen abgeleiteten Vorkondensaten, gegebenenfalls in Anwesenheit eines Katalysators und/oder eines Lösungsmittels durch Einwirken von Wasser oder Feuchtigkeit, wobei 10 bis 100 Mol-% auf der Basis monomerer Verbindungen der hydrolytisch kondensierbaren Verbindungen Silane der allgemeinen Formel I sind, 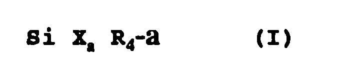 in der die Reste und Indices gleich oder verschieden sind und folgende Bedeutung haben:
R = gegebenenfalls substituiertes Alkyl, Alkenyl, Aryl, Alkylaryl oder Arylalkyl mit 1 bis 50 Kohlenstoff-Atomen, wobei diese Reste durch Sauerstoff- oder Schwefel-Atome durch Urethan-, Ester-, Carbonyl-, Amid- oder Amino-Gruppen unterbrochen sein können;
x = Wasserstoff, Halogen, Hydroxy, Alkoxy, Acyloxy, Alkylcarbonyl, Alkoxycarbonyl oder NR'₂ mit R' = Wasserstoff, Alkyl oder Aryl;
a = 1, 2 oder 3.
